# EUROPEAN PATENT APPLICATION

(11) **EP 4 641 515 A1**
(43) Date of publication of application: **29.10.2025**
(21) Application number: 25171787.2
(22) Date of filing: 22.04.2025
(51) Int. Cl.: G06V 10/44, G06V 10/764, G06N 3/045, G06V 10/74, G06V 20/70, G06V 30/148

(54) **SYSTEM AND METHOD FOR LOGO DETECTION AND CLASSIFICATION USING MACHINE- LEARNING**

(30) Priority: 23.04.2024 US 202463637706 P
(71) Applicant: Fiserv, Inc., Milwaukee, WI 53203 (US)
(72) Inventor: ZHANG, Zhiqiang, San Ramon (US); HUANG, Yuanjun, Sunnyvale (US)
(74) Representative: Haseltine Lake Kempner LLP

(57) **Abstract**

A system and method of identifying merchant logos may include one or more processors and a computer-readable, non-transitory medium including instructions which, when executed by the one or more processors, cause at least one of the one or more processors to obtain a logo image associated with a merchant, execute a logo detection machine-learning model using as input the logo image to determine whether the logo image is a logo, in response to determining that the image logo is a logo, execute a logo classification machine-learning architecture to identify the merchant.

## Description

### BACKGROUND

Logos are an important attribute in a variety of applications. Logos may provide a visual indication and help consumers identify and recognize businesses, and particularly products and services of those businesses. Logos may include text, graphical indicia (e.g., symbols, pictures, etc.), or a combination of text and images. Given the importance of logos to the brand image of a business, accurate identification of a logo is desirable.

### SUMMARY

Various aspects of the disclosure may now be described with regard to certain examples and embodiments, which are intended to illustrate but not limit the disclosure. Although the examples and embodiments described herein may focus on, for the purpose of illustration, specific systems and processes, one of skill in the art may appreciate the examples are illustrative only, and are not intended to be limiting.

Aspects of the present disclosure are directed to a system including one or more processors, and a computer-readable, non-transitory medium including instructions which, when executed by the one or more processors, cause at least one of the one or more processors to obtain a logo image associated with a merchant, execute a logo detection machine-learning model using as input the logo image to determine whether the logo image is a logo, in response to determining that the image logo is a logo, execute a logo classification machine-learning architecture to identify the merchant.

In some implementations, the logo image is automatically extracted from a website associated with the merchant. In some implementations, the logo image is automatically extracted from a social media account associated with the merchant. In some implementations, the instructions further cause the one or more processors to verify that the identified merchant corresponds to a merchant associated with an origin of the logo image. In some implementations, the instructions further cause the one or more processors to display, to a user, transaction data of a transaction associated with the merchant, wherein the transaction data includes the logo image. In some implementations, the logo detection machine-learning model includes an ensemble decision model which receives as input outputs from one or more task-specific machine-learning models. In some implementations, the logo classification machine-learning model receives as input one or more semantic similarity scores from one or more task-specific semantic similarity machine-learning models.

Aspects of the present disclosure are directed to a system including one or more processors, and a computer-readable, non-transitory medium including instructions which, when executed by the one or more processors, cause at least one of the one or more processors to execute a logo classification machine-learning model using as input an image to determine a vector of logo classification scores for the image, the logo classification scores indicating a confidence that the image is a logo, execute a logo fingerprint comparison machine-learning model using as input the image to determine a vector of similarity scores for the image, the similarity scores indicating similarity to a set of known logos, and execute a logo detection machine-learning model using as input the vector of logo classification scores and the vector of similarity scores to generate a prediction of whether the image is a logo.

In some implementations, the logo detection machine-learning model includes an ensemble decision model. In some implementations, the logo detection machine-learning model includes a random forest machine-learning model. In some implementations, the logo classification machine-learning model is trained by executing the logo classification machine-learning model using as input four-channel logo images. In some implementations, the logo classification scores output by the logo classification machine-learning model include classification scores for non-logo images, non-logo avatars, cropped logos, and logos. In some implementations, the logo fingerprint comparison machine-learning model is trained by executing the logo fingerprint comparison machine-learning model using as input a first training logo image and a second training logo image to generate a comparison result indicating whether the first training logo image and the second training logo image correspond to a same merchant. In some implementations, the similarity scores determined by the logo fingerprint comparison machine-learning model indicate whether the image corresponds to a known logo image included in training data of the logo fingerprint comparison machine-learning model.

Aspects of the present disclosure are directed to a system including one or more processors, and a computer-readable, non-transitory medium including instructions which, when executed by the one or more processors, cause at least one of the one or more processors to execute a feature extraction machine-learning model using as input a logo image to extract features of the logo image, execute a semantic comparison machine-learning model using as input the extracted features of the logo image and one or more merchant attributes of a merchant to determine a similarity vector for the logo image, and execute a logo classification machine-learning model using as input the similarity vector to determine whether the logo image is a logo of the merchant.

In some implementations, the extracted features of the logo image include image features and detected text. In some implementations, the semantic comparison machine-learning model includes a character-level semantic similarity model to determine a character-level similarity score of the similarity vector. In some implementations, the semantic comparison machine-learning model includes a word-level semantic similarity model to determine a word-level similarity score of the similarity vector. In some implementations, the semantic comparison machine-learning model includes a dual-modality similarity model to determine a dual-modality similarity score of the similarity vector. In some implementations, the similarity vector indicates a similarity between attributes of the merchant and the extracted features of the logo image.

The foregoing summary is illustrative only and is not intended to be in any way limiting. In addition to the illustrative aspects, embodiments, and features described above, further aspects, embodiments, and features may become apparent by reference to the following drawings and the detailed description.

### BRIEF DESCRIPTION OF THE DRAWINGS

FIG. 1 is an example block diagram of a computing system implementing a logo detection and classification application.
FIG. 2 illustrates an example flowchart outlining the operations of a process 200 for detecting and classifying logo images.
FIG. 3 illustrates an example logo detection model 300.
FIG. 4 illustrates an example block diagram of a logo classification model.
FIG. 5 illustrates an example block diagram of a logo fingerprint comparison model.
FIG. 6 illustrates an example logo classification model.
FIG. 7 illustrates an example logo classification model.
FIG. 8 illustrates an example character-level semantic similarity model.
FIG. 9 illustrates an example text semantic similarity model.
FIG. 10 illustrates an example dual-modality semantics model.

The foregoing and other features of the present disclosure may become apparent from the following description and appended claims, taken in conjunction with the accompanying drawings. Understanding that these drawings depict only several embodiments in accordance with the disclosure and are therefore, not to be considered limiting of its scope, the disclosure may be described with additional specificity and detail through use of the accompanying drawings.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It may be readily understood that the aspects of the present disclosure, as generally described herein, and illustrated in the figures, may be arranged, substituted, combined, and designed in a wide variety of different configurations, all of which are explicitly contemplated and made part of this disclosure.

The present disclosure provides for automatically detecting and classifying logo images such that logos can be accurately and automatically paired with merchants. The present disclosure provides for machine-learning models and methods for determining whether an image, such as an image from a merchant webpage, is a logo and then determining whether the logo image is a logo of a merchant, such as the merchant associated with the merchant webpage. Various machine-learning architectures are discussed for extracting features from images and text, determining similarities between the images and text and/or text extracted from the images and the text, and determining whether an image is a logo of a merchant. Some of the machine-learning models discussed herein include task-specific models such as a logo classification model for generating a vector of logo scores corresponding to whether an image is a logo or not a logo, a logo fingerprint comparison model for generating a vector of comparison scores corresponding to whether the image is a known logo, and an ensemble decision model for determining, based on the vector of logo scores and the vector of comparison scores from the task-specific models, whether the image is a logo or not a logo. Some of the machine-learning models discussed herein include task-specific models such as semantic comparison models for generating various semantic similarity scores corresponding to similarities between merchant text associated with a merchant and an image which has been determined to be a logo image, and a classification model 660 for determining, based on the semantic similarity scores, whether the logo image is a logo of the merchant. The various machine-learning models and processes provide for automatic and accurate detection and classification of logos. In this way, a library of merchants and corresponding logos can be automatically generated for displaying accurate merchant logos to aid in recognizing merchants and associated transactions.

While embodiments and examples are discussed relative to identifying and classifying logos, the present disclosure relates to accurately and automatically identifying and classifying images in general. For example, various embodiments and examples discussed herein may be used to accurately and automatically identify faces and match names to faces. In another example, various embodiments and examples discussed herein may be used to accurately and automatically identify product images and match product images to product descriptions.

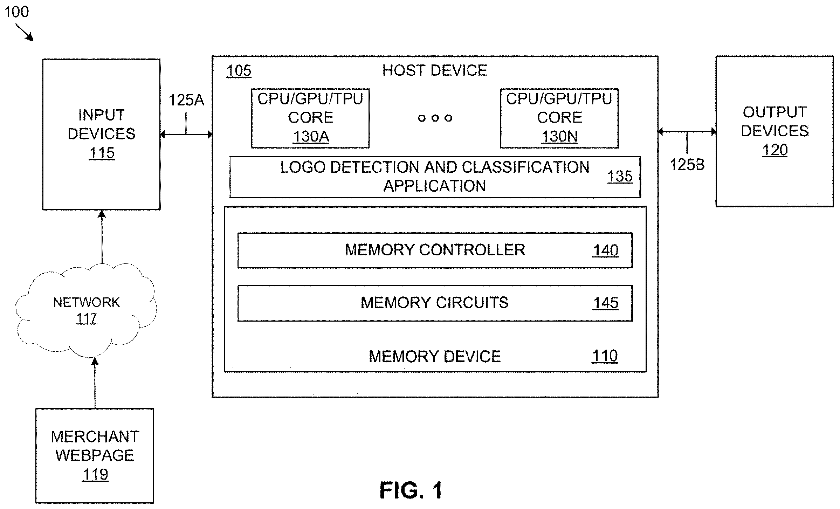

Referring now to FIG. 1, an example block diagram of a computing system 100 is shown. The computing system 100 includes a host device 105. The host device 105 includes a memory device 110. In other embodiments, the memory device 110 associated with the host device 105 is a separate device that is communicatively coupled to the host device 105 instead. The host device 105 may be configured to receive input from one or more input devices 115 and provide output to one or more output devices 120. The host device 105 may be configured to communicate with the input devices 115 and the output devices 120 via appropriate interfaces or channels 125A and 125B, respectively. The computing system 100 may be implemented in a variety of computing devices such as computers (e.g., desktop, laptop, etc.), tablets, personal digital assistants, mobile devices, wearable computing devices such as smart watches, other handheld or portable devices, or any other computing unit suitable for performing operations described herein using the host device 105.

Further, some or all of the features described in the present disclosure may be implemented on a client device, a server device, or a cloud/distributed computing environment, or a combination thereof. Additionally, unless otherwise indicated, functions described herein as being performed by a computing device (e.g., the computing system 100) may be implemented by multiple computing devices in a distributed environment, and *vice versa.*

The input devices 115 may include any of a variety of input technologies such as a keyboard, stylus, touch screen, mouse, track ball, keypad, microphone, voice recognition, motion recognition, remote controllers, input ports, one or more buttons, dials, joysticks, camera, and any other input peripheral that is associated with the host device 105 and that allows an external source, such as a user, to enter information (e.g., data) into the host device and send instructions to the host device 105. Similarly, the output devices 120 may include a variety of output technologies such as external memories, printers, speakers, displays, microphones, light emitting diodes, headphones, plotters, speech generating devices, video devices, global positioning systems, and any other output peripherals that are configured to receive information (e.g., data) from the host device 105. The "data" that is either input into the host device 105 and/or output from the host device may include any of a variety of textual data, graphical data, video data, image data, sound data, combinations thereof, or other types of analog and/or digital data that is suitable for processing using the computing system 100 for achieving the functions described herein.

In some implementations, the data input to the host device 105 includes data obtained by the input devices 115 from a merchant webpage 119 via a network 117. The network 117 may be any network, such as the internet. The merchant webpage 119 may be a web site associated with a merchant or a social media account associated with the merchant. The data may include images from the merchant webpage 119 for detection and identification of a merchant logo from the images, as discussed herein. In an example, images are obtained from the merchant webpage 119 using web scraping to provide the images to the host device 105 for detection and identification of the merchant logo from the images. In some implementations, the merchant site 119 includes a database of images collected from a plurality of web pages associated with one or more merchants.

The host device 105 may include one or more Central Processing Unit (CPU) cores, Graphics Processing Unit (GPU), Tensor Processing Unit (TPU) cores, or processors 130A-130N (collectively referred to herein as the processors 130) that may be configured to execute instructions for running one or more applications associated with the host device 105. In some embodiments, the instructions and data needed to run the one or more applications may be stored within the memory device 110. The host device 105 may also be configured to store the results of running the one or more applications within the memory device 110. One such application on the host device 105 may include a logo detection and classification application 135. The logo detection and classification application 135 may be executed by the processors 130. The instructions to execute the logo detection and classification application 135 may be stored within the memory device 110. The logo detection and classification application 135 may be used to identify images that contain logos and further associate each identified logo to a particular entity (e.g., business). In particular, the logo detection and classification application 135 may be used to detect whether an image is a logo and further predict whether the logo is a correct logo for a particular entity. Thus, the host device 105 may be configured to request the memory device 110 to perform a variety of operations. For example, the host device 105 may request the memory device 110 to read data, write data, update or delete data, and/or perform management or other operations.

To facilitate communication with the memory device 110, the memory device 110 may include or be associated with a memory controller 140. Although the memory controller 140 is shown as being part of the memory device 110, in some embodiments, the memory controller 140 may instead be part of another element of the computing system 100 and operatively associated with the memory device 110. In some embodiments, the memory controller 140 may be configured as a logical block or circuitry that receives instructions from the host device 105 and performs operations in accordance with those instructions. For example, when the execution of the logo detection and classification application 135 is desired, the host device 105(e.g., the processors 130) may send a request to the memory controller 140. The memory controller 140 may read the instructions associated with the logo detection and classification application 135 that are stored within the memory device 110, and send those instructions back to the host device 105. Those instructions may be temporarily stored within a memory on the host device 105. The processors 130 may then execute those instructions by performing one or more operations called for by those instructions of the logo detection and classification application 135.

The memory device 110 may include one or more memory circuits 145 that store data and instructions. The memory circuits 145 may be any of a variety of memory types, including a variety of volatile memories, non-volatile memories, or a combination thereof. For example, in some embodiments, one or more of the memory circuits 145 or portions thereof may include NAND flash memory cores. In other embodiments, one or more of the memory circuits 145 or portions thereof may include NOR flash memory cores, Static Random Access Memory (SRAM) cores, Dynamic Random Access Memory (DRAM) cores, Magnetoresistive Random Access Memory (MRAM) cores, Phase Change Memory (PCM) cores, Resistive Random Access Memory (ReRAM) cores, 3D XPoint memory cores, ferroelectric random-access memory (FeRAM) cores, and other types of memory cores that are suitable for use within the memory device 110. In some embodiments, one or more of the memory circuits 145 or portions thereof may be configured as other types of storage class memory ("SCM"). Generally speaking, the memory circuits 145 may include any of a variety of Random Access Memory (RAM), Read-Only Memory (ROM), Programmable ROM (PROM), Erasable PROM (EPROM), Electrically EPROM (EEPROM), hard disk drives, flash drives, memory tapes, cloud memory, or any combination of primary and/or secondary memory that is suitable for performing the operations described herein.

It is to be understood that only some components of the computing system 100 are shown and described in FIG. 1. However, the computing system 100 may include other components such as various batteries and power sources, networking interfaces, routers, switches, external memory systems, controllers, etc. Generally speaking, the computing system 100 may include any of a variety of hardware, software, and/or firmware components that are needed or considered desirable in performing the functions described herein. Similarly, the host device 105, the input devices 115, the output devices 120, and the memory device 110, including the memory controller 140 and the memory circuits 145, may include hardware, software, and/or firmware components that are considered necessary or desirable in performing the functions described herein. In addition, in certain embodiments, the memory device 110 may integrate some or all of the components of the host device 105, including, for example, the processors 130, and the processors may be configured to execute the logo detection and classification application 135, as described herein.

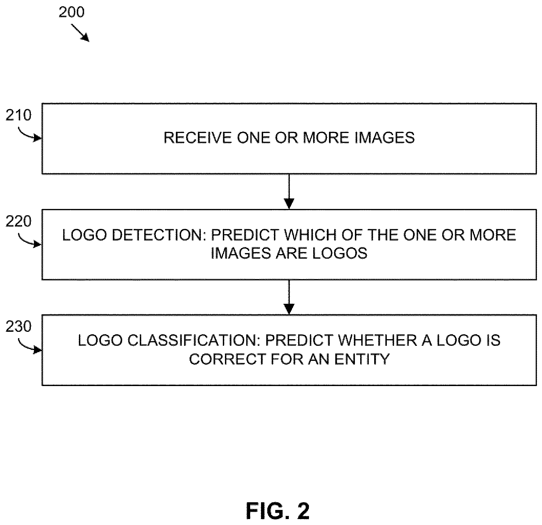

Turning to FIG. 2, an example flowchart outlining the operations of a process 200 is shown. The process 200 includes operations that may be performed by the logo detection and classification application 135. The process 200 may be executed or implemented by the processors 130 executing computer-readable instructions stored on a memory (e.g., the memory device 110). The process 200 may be used for logo detection and classification. Thus, the process 200 includes receiving one or more images at operation 210. The one or more images may be associated with one or more entities. The one or more entities may be merchants, businesses, or other commercial and non-commercial company. Each of the one or more images may be a visual representation of something. Each of the one or more images may include still images, video images, vector images, bitmap images, two dimensional images (e.g., drawing, painting, photograph, etc.), three dimensional images, infrared images, fluorescent images, and any other types or modalities of images. The one or more images may be received automatically, for example, through a web crawler or other process or application configured to browse the internet and gather information. In some embodiments, such a web crawler or other process or application may be operated by a search engine (e.g., Google^{®}). In some embodiments, the one or more images may be gathered by a user and manually provided to the logo detection and classification application 135. Each image may include one or more types of information. For example, each image may include one or more of graphics, pictures, icons, numbers, text, special characters, alpha-numeric information, metadata or attributes (e.g., when the image was created, updated etc., where the image was downloaded from, source of the image, etc.), and/or any other type of information suitable for presenting on an image. Each image may be associated with an entity and may include information such as entity name, entity domain, entity category, etc.

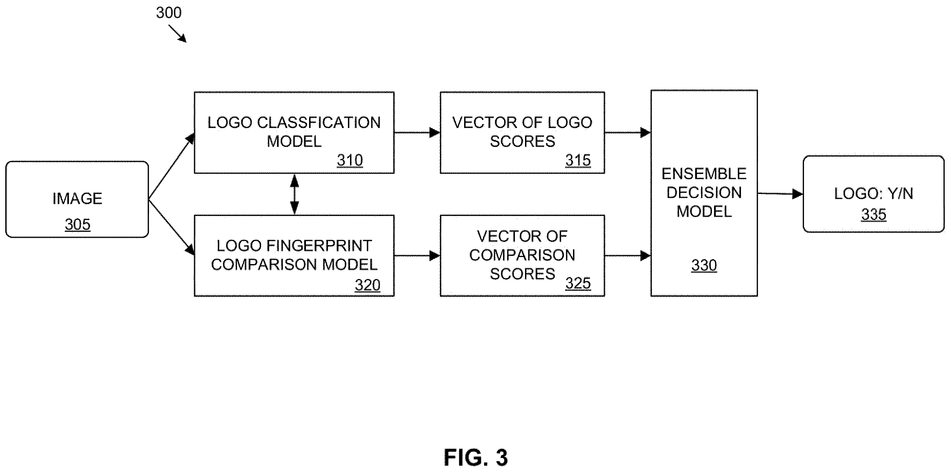

At operation 220, the processors 130 classify each of the one or more images as a logo or not. The processors 130 may filter out each of the one or more images that does not include a logo. The process for classifying an image as a logo or not is discussed in greater detail in FIGS. 3-5 below. At the end of operation 220, the processors 130 may be left with a subset of one or more images that all include a logo. In some embodiments, if an image includes a logo plus additional non-logo information, that image may also be classified as including a logo and added to the subset of the one or more images that include logos.

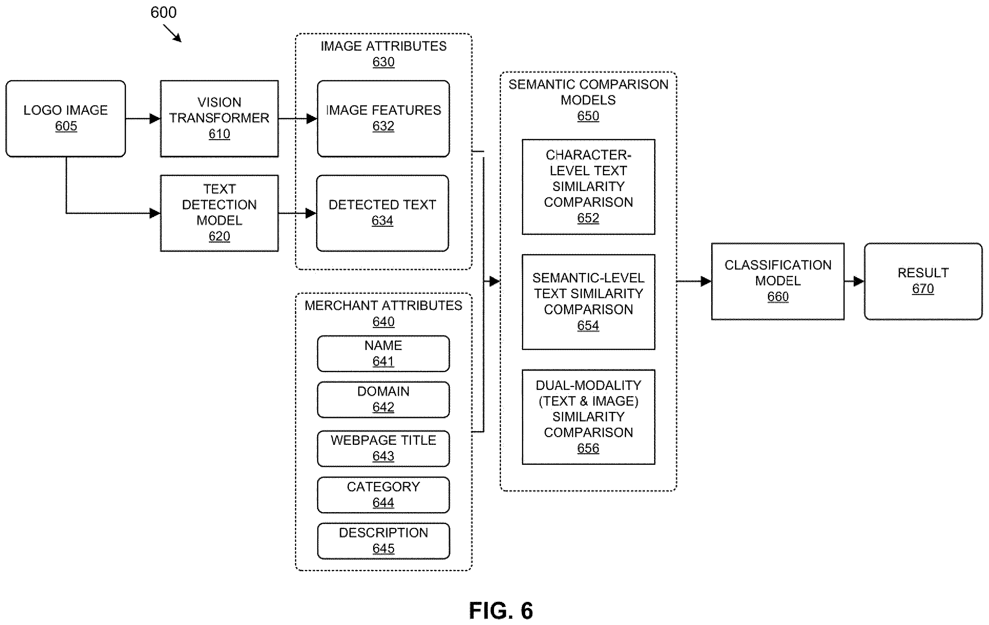

At operation 230, the processors 130 predict, for each image in the subset of the one or more images that includes a logo, whether that image represents a correct logo for an entity. For example, if an image that is classified as having a logo includes corresponding text indicating which entity that logo corresponds to, the processors 130 may, at the operation 230, verify whether the logo is the correct logo for that entity. If an image that is classified as having a logo does not include corresponding text indicating which entity that logo corresponds to, the processors 130 may, at the operation 230, identify which entity the logo corresponds to. For example, if an image includes a Logo A purported for Merchant B, the processors 130 may confirm whether the Logo A is the correct logo for the Merchant A. If the image includes only the Logo A, the processors 130 may determine that the Logo A corresponds to Merchant B. The process for predicting whether a logo is the correct logo for an entity is discussed in greater detail in FIGS. 6-10 below.

Turning to FIG. 3, an example logo detection model 300 is shown. The logo detection model 300 may be used to classify each image received at the operation 210 as a logo or not. The logo detection model 300 may be implemented for the operation 220. The logo detection model 300 may be a machine learning neural network or other computer-vision model trained to receive the images as an input and identify whether the images contain a logo or not. The logo detection model 300 may be another type of a machine learning/artificial intelligence-based model that is configured to identify logos in images. The logo detection model 300 may be part of the logo detection and classification application 135. The operations of the logo detection model 300 may be executed by the processor 130 (e.g., based on computer-readable instruction stored in the memory device 110).

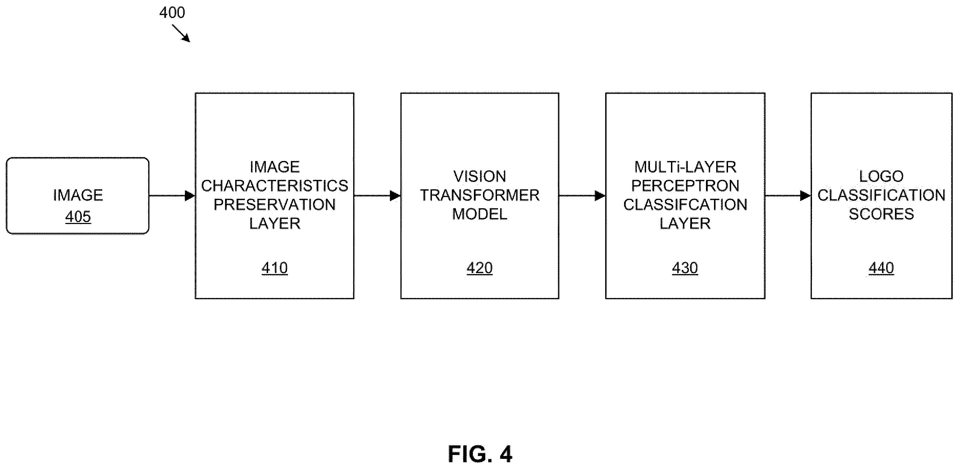

To detect whether an image 305 includes a logo or not, the logo detection model 300 includes a logo classification model 310. The logo classification model 310 may be configured to extract image features from the image 305. The logo classification model 310 is discussed in greater detail in FIG. 4. Based on the extracted image features, the logo classification model 310 may generate a vector of logo scores 315. For example, based on the extracted image features, the logo classification model 310 may determine whether an image is a non-logo image (e.g., includes no logo at all), a non-logo avatar (e.g., a brand icon or mascot that may move, change, or operate freely), a logo (e.g., a graphic mark or symbol to identify a business or product), or a partial/cropped logo (e.g., an image that include a partial logo with or without additional non-logo information). The vector of logo scores 315 may be generated based on the whether the image is a non-logo image, a non-logo avatar, a logo, or a partial/cropped logo.

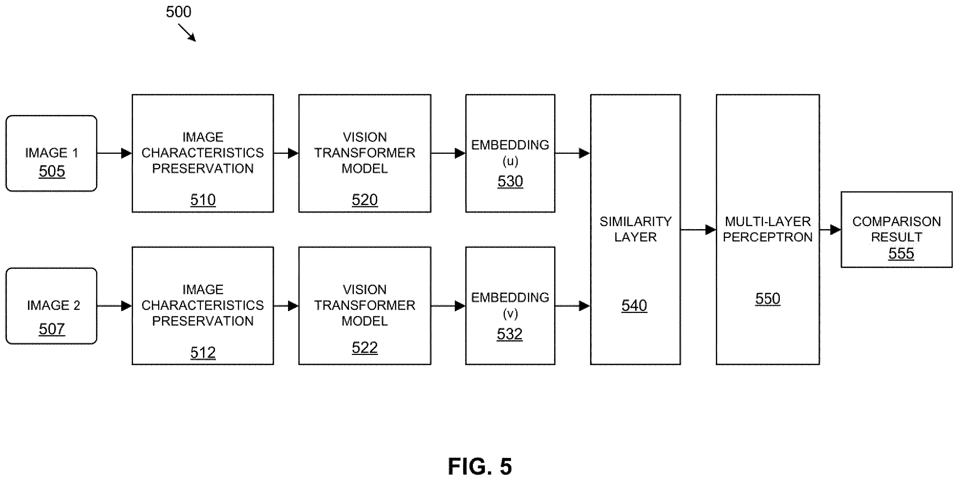

The extracted image features may also be provided to a logo fingerprint comparison model 320. The logo fingerprint comparison model 320 may compare the extracted image features against images in a database having well-known brand logo images. In some cases, images sourced from websites or social media sites may contain wrong logo images from other popular well-known brands. The logo fingerprint comparison model 320 may generated a vector of comparison scores 325 based on the comparison. The logo fingerprint comparison model 320 is discussed in more detail in FIG. 5 below. The logo fingerprint comparison model 320 may be trained by executing the logo fingerprint comparison model 320 using as input a first training logo image and a second training logo image to generate a comparison result indicating whether the first training logo image and the second training logo image correspond to a same merchant, and determining, based on labels of the first training logo image and the second training logo image, whether the comparison result is accurate. The logo fingerprint comparison model 320 may be updated based on whether the comparison result is accurate.

The logo classification model 310 and the logo fingerprint comparison model 320 may be referred to as task-specific models which generate output specific to their respective tasks, such as the vector of logo scores 315 and the vector of comparison scores. The outputs of the task-specific models may be provided to an ensemble decision model as input. The ensemble decision model 330 may combine the vector of logo scores 315 and the vector of comparison scores 325 to predict whether the image 305 is a logo or not. The ensemble decision model 330 may generate an output 335 indicative of whether the image 305 is a logo or not. For example, in some embodiments, the ensemble decision model 330 may determine whether the image 305 is a non-logo image, a non-logo avatar, a logo, or a cropped logo. If the ensemble decision model 330 determines that the image 305 is not a logo, that image may be rejected. In some embodiments, the ensemble decision model 330 may include or be trained using a random forest machine-learning model. Although the ensemble decision model 330 has been described as identifying logos, in some embodiments, the ensemble decision model may be used (and/or combined with other machine learning models) to detect other specific characteristics in the image.

Referring to FIG. 4, an example block diagram of a logo classification model 400 is shown. The logo classification model 400 is analogous to the logo classification model 310. The logo classification model 400 receives an image 405 (e.g., the image 305). The image 405 is input into an image characteristics preservation layer 410. In some embodiments, the image 405 may be in a 4-channel Red Green Blue Alpha (RGBA) format. In some embodiments, the image 405 may be converted from an RGBA format to a Red Green Blue (RGB) format before inputting into the image characteristics preservation layer 410. In some embodiments, an RGBA format image may be converted into an RGB format image by pasting/copying the RGBA image onto a white colored background. The image characteristics preservation layer 410 may receive the RGBA image (or RGB image) and preserve logo image characteristics in the image. The image characteristics preservation layer 410 may be a convolutional layer configured to preserve certain image characteristics in the image 405. The logo-classification model 400 may be trained using as input 4-channel images in the 4-channel RGBA format.

The output from the image characteristics preservation layer 410 may be input into a vision transformer model 420. The vision transformer model 420 may be implemented in some embodiments as a deep neural network such as a computer vision model like MobileNet, ResNet, etc. The vision transformer model 420 may include weights which may be fine-tuned for optimal logo detection. The weights of the vision transformer model 420 may be updated in a training process in which the output of the vision transformer model 420 generated using training data as input is compared to labels of the training data.

The output from the vision transformer model 420 may be input into a multi-layer perceptron classification layer 430. The multi-layer perceptron classification layer 430 may produce dense embeddings and classification scores 440 for different image types: non-logo images, non-logo avatars, logos, and cropped logos. The classification scores 440 are the vector of logo scores 315. In an example, the classification scores 440 and the vector of logo scores 315 include a vector having values (i.e., scores) for each of the categories of non-logo images, non-logo avatars, logos, and cropped logos.

Referring to FIG. 5, an example block diagram of a logo fingerprint comparison model 500 is shown. The logo fingerprint comparison model 500 is analogous to the logo fingerprint comparison model 320. The logo fingerprint comparison model 500 may receive two images to compare. For example, the logo fingerprint comparison model 500 may receive a first image 505 and a second image 507. The first image 505 may correspond to the image 305, 405 that is being classified as a logo image or not. The second image 507 may be an image of an existing logo from a database. The first image 505 may be compared against the second image 507 to determine similarities between the first image and the second image.

In some embodiments, each of the first image 505 and the second image 507 may be input into an image characteristics preservation layer 510, 512, respectively. The image characteristics preservation layer 515, 520 is analogous to the image characteristics preservation layer 410, and therefore, not described again. The image characteristics preservation layer 510, 512 may preserve certain image characteristics in the first image 505 and the second image 507. The output from the image characteristics preservation layer 510, 512 is input into a vision transformer model 520, 522, respectively. The vision transformer model 520, 522 is analogous to the vision transformer model 420, and therefore, not described again. The output from the vision transformer model 520, 522 may be used to generate an embedding 530, 532, respectively. For example, the vision transformer model 520 may generate a "u" embedding for the first image 505 and the vision transformer model 522 may generate a "v" embedding for the second image 507. The embeddings 530, 532 may be considered a "fingerprint" of an image and may be used to compare two images.

The embeddings 530, 532 may be input into a similarity layer 540 configured to identify similarities between the embedding 530 and the embedding 532. In some embodiments, the similarity layer 540 may implement a similarity function such as |u-v| to determine a distance between the embedding 530 and the embedding 532. In other embodiments, the similarity layer 540 may implement other functions to identify similarities between the embeddings 530, 532. The output from the similarity layer 540 may be input into a multi-layer perceptron classification layer 550 that may generate a vector of comparison scores 555. The multi-layer perceptron classification layer 550 is similar to the multi-layer perceptron classification layer 420, and therefore, not described again. The vector of comparison scores 555 are analogous to the vector of comparison scores 325. For example, in some embodiments, the multi-layer perceptron classification layer 550 may generate a score of 0 if the first image 505 and the second image 507 correspond to the same entity (e.g., same merchant) and a score of 1 if the first and second images correspond to different entities. In some embodiments, if the first image 505 is too similar to an existing image (e.g., the second image 507), the first image may be classified as an incorrect logo. In an example, if the first image is too similar to an existing image corresponding to a social media logo, the first image may be classified as an incorrect logo, not the logo of the merchant. In this way, false positives may be prevented, as many merchant webpages include logos of social media sites.

Turning to FIG. 6, an example logo classification model 600 is shown. The logo classification model 600 may implement the operation 230 and may be used to predict whether an image (referred to as a logo image) 605 is the correct logo for an entity (e.g., merchant). The image 605 that is input into the logo classification model 600 may be an image that has been classified by the logo detection model 300 of FIG. 3 as including a logo.

A vision transformer 610 and a text detection model 620 are executed using as input the logo image 605 to generate image attributes 630. The image attributes 630 may include image features 632 and detected text 634. The vision transformer 610 is executed using as input the logo image 605 to extract the image features 632 of the logo image 605. The vision transformer 610 may be implemented in some embodiments as a deep neural network such as a computer vision model like MobileNet, ResNet, etc. The text detection model 620 is executed using as input the logo image 605 to extract the detected text 634 of the logo image 605. The detected text 634 may be text included in the logo image 605. In an example, the logo image 605 includes a logo of a merchant and a name of the merchant. In an example, the logo image 605 includes a logo of a merchant and the logo includes stylized text related to the logo and/or a slogan of the merchant.

The image attributes 630 and merchant attributes 640 are provided to one or more semantic comparison models 650. The merchant attributes 640 may include a merchant name 641, a merchant domain name 642, a merchant webpage title 643, a merchant category 644, and a description 645. The merchant attributes 640 may be obtained from a website of the merchant and/or a social media account of the merchant. The merchant attributes 640 may be obtained by scraping the website and/or social media account of the merchant for the logo image 605 and the merchant attributes 640. The merchant attributes 640 may be obtained from third-party sources, such as public records. The merchant name 641 may be obtained from the merchant website and may be verified using other records, such as incorporation records of the merchant. The merchant domain 642 may be the URL of the merchant website. In some implementations, the merchant domain 642 includes text parsed from the URL of the merchant website. The webpage title 643 may be obtained from the website of the merchant, including metadata of the website of the merchant. The merchant category 644 may include one or more categories of the merchant. In some implementations, the merchant category 644 includes a merchant category code (MCC) of the merchant. The merchant category 644 may be obtained from other records and/or determined using other systems. The description 645 may be a description of the website of the merchant, a description of the merchant on the website of the merchant, and/or a description of the merchant from another source.

The one or more semantic comparison models 650 receive as input the image attributes 630 and the merchant attributes 640 and provide one or more similarity scores or embedding vectors to a classification model 660. The one or more similarity scores or embedding vectors may indicate one or more levels of similarity between the image attributes 630 and the merchant attributes 640. The one or more similarity scores or embedding vectors may be generated by different models of the one or more semantic comparison models 650. The one or more semantic comparison models 650 may include a character-level text similarity comparison model 652, a semantic-level text similarity comparison model 654, and a dual-modality similarity comparison model 656. The character-level text similarity comparison model 652 may output a character-level similarity between the image attributes 630, particularly the detected text 634, and the merchant attributes 640. The semantic-level text similarity comparison model 654, also referred to as a word-level similarity model, may output a word-level similarity between the image attributes 630, particularly the detected text 634, and the merchant attributes 640. The dual-modality similarity comparison model 656 may output a similarity between the image attributes 630 and the merchant attributes 640, taking into account both text and images. The dual-modality similarity comparison model 656 may be trained using logo images and corresponding merchant text. In an example, the dual-modality similarity comparison model 656 is trained using logos of charities including hearts and text associated with the charities such that the dual-modality similarity comparison model 656 recognizes a similarity between a heart in a logo and text associated with charities.

The one or more semantic comparison models 650 provide the one or more semantic similarity scores or embedding vectors to the classification model 660 as input. The one or more semantic comparison models 650 may be referred to as task-specific models, the outputs of which are provided to the classification model 660 as input. The classification model 660 may be executed using as input the one or more semantic similarity scores or embedding vectors to generate a result 670. The result 670 may indicate whether the logo image 605 corresponds to the merchant. In an example, the result 670 indicates that a logo image, extracted from a merchant's website and confirmed to be a logo image, is actually a logo of the merchant. The result 670 may confirm that the logo image is the correct logo for the merchant. The model 600 may be used to generate a library of merchants and their corresponding logos. The library of merchants and corresponding logos may be used to label transactions with merchants with their corresponding logos to aid users in recognizing merchants and transactions. In this way, the library of merchants and corresponding logos may be automatically generated and made available for labeling transactions. In an example, transaction data may be displayed to a user corresponding to a transaction with a merchant, the transaction data including a logo of the merchant to aid the user in identifying the merchant and recalling the transaction.

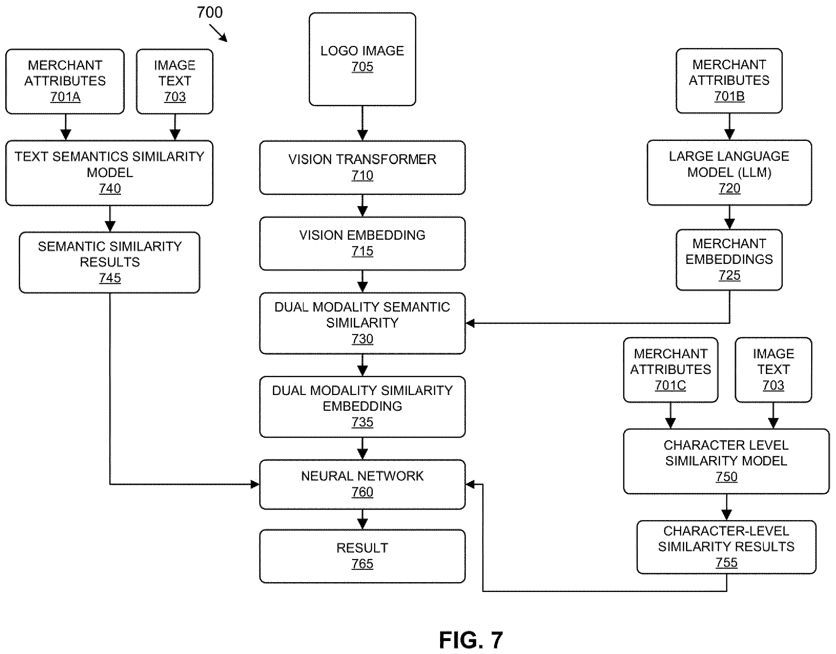

FIG. 7 illustrates an example logo classification model 700. The logo classification model 700 may implement the operation 230 and may be used to predict whether an image (referred to as a logo image) 705 is the correct logo for an entity (e.g., merchant). The image 705 that is input into the logo classification model 700 may be an image that has been classified by the logo detection model 300 of FIG. 3 as including a logo. The logo classification model 700 may be similar to the logo classification model 600 of FIG. 6.

The logo image 705 is provided as input to a vision transformer 710 which outputs a vision embedding 715 including features of the logo image 705. In some implementations, the vision transformer 710 is the vision transformer 610 of FIG. 6 and the vision embedding 715 includes the image features 632 of FIG. 6.

The vision embedding 715 is provided to a dual-modality semantic similarity model 730, such as the dual-modality similarity comparison model 656 of FIG. 6. The dual-modality semantic similarity model 730 may also receive as input one or more merchant embeddings 725 generated by a large language model (LLM) 720. The LLM 720 may generate the one or more merchant embeddings 725 using as input one or more merchant attributes 701B. The one or more merchant attributes 701B may include a merchant name, a merchant webpage title, a merchant description, and a merchant category. The one or more merchant embeddings 725 may be extracted from the one or more merchant attributes 701B to capture features of the one or more merchant attributes.

The dual-modality semantic similarity model 730 receives as input the vision embedding 715 and the one or more merchant embeddings 725 to generate a dual-modality similarity embedding 735 representing one or more similarities between the logo image 705 and the one or more merchant attributes 701B. The dual-modality similarity embedding 735 is provided as input to a neural network 760.

The neural network 760 may be a multi-layer perceptron. The neural network 760 receives as input the dual-modality similarity embedding 735, one or more semantic similarity results 745, and one or more character-level similarity results 755.

The one or more semantic similarity results 745 are generated by a text semantics similarity model 740 using as input one or more merchant attributes 701A and image text 703. The one or more merchant attributes 701A may include a merchant name, a merchant webpage title, a merchant domain or URL, and a merchant description. In some implementations, the merchant attributes 701A include the one or more merchant attributes 701B. The image text 703 may include text extracted from the logo image 705, such as the detected text 634 of FIG. 6. The text semantics similarity model 740, also referred to as a word-level similarity model, is executed using as input the one or more merchant attributes 701A and the image text 703 to generate the semantic similarity results 745 representing a word-level semantic similarity between the one or more merchant attributes 701A and the image text 703.

The one or more character-level similarity results 755 are generated by a character-level similarity model 750 using as input using as input one or more merchant attributes 701C and the image text 703. The one or more merchant attributes 701C may include a merchant name, a merchant webpage title, and a merchant domain or URL. In some implementations, the merchant attributes 701C include the one or more merchant attributes 701A and/or the one or more merchant attributes 701B. The character-level similarity model 750 is executed using as input the one or more merchant attributes 701C and the image text 703 to generate the character-level similarity results 755 representing a character-level semantic similarity between the one or more merchant attributes 701C and the image text 703.

The neural network 760 is executed using as input the dual-modality semantic similarity 730, the semantic similarity results 745, and the character-level similarity results 755, and any other semantic similarity results or other similarity results to generate a result 765. The neural network 760 may be similar to the classification model 660 of FIG. 6. The result 765 may indicate whether the logo image 705 corresponds to the merchant. In an example, the result 765 indicates that a logo image, extracted from a merchant's website and confirmed to be a logo image, is actually a logo of the merchant. The result 765 may confirm that the logo image is the correct logo for the merchant. The model 700 may be used to generate a library of merchants and their corresponding logos. The library of merchants and corresponding logos may be used to label transactions with merchants with their corresponding logos to aid users in recognizing merchants and transactions. In this way, the library of merchants and corresponding logos may be automatically generated and made available for labeling transactions.

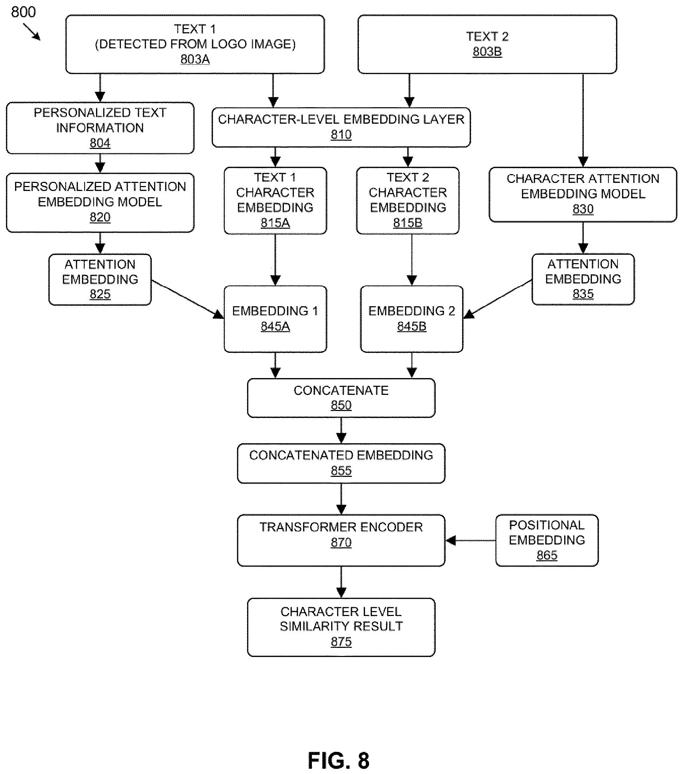

FIG. 8 illustrates an example character-level semantic similarity model 800. The character-level semantic similarity model 800 may be, or be similar to, the character-level text similarity comparison model 652 of FIG. 6 and/or the character-level similarity model 750 of FIG. 7.

The character-level semantic similarity model 800 may receive as input first text 803A and second text 803B. The first text 803A may be extracted from a logo image, as discussed herein. The second text 803B may be text associated with a merchant, such as text taken from a merchant webpage or received from other sources, as discussed herein. The first text 803A may include personalized text information 804. The personalized text information 804 may include text as well as corresponding contextual information, such as relative location and size in the logo image and word frequency. In an example, text that is relatively more centered and relatively larger may be more important and more likely to be part of a logo. In an example, text in a logo image taken from a merchant website that is larger and more centered may be part of the logo, while text that is smaller and less centered may be part of a copyright notice of the website. In an example, words with a lower word frequency in natural language may be more likely to be part of the logo, as words with a higher word frequency may be more likely to be part of other text on a website. A personalized attention embedding model 820 may take as input the first text 803A and/or the personalized text information 804 to generate a first attention embedding 825 indicating a relative importance of, or amount of attention to be allocated to, characters and/or portions of the first text 803A.

The second text 803B may be provided as input to a character attention embedding model 830 which generates a second attention embedding 835 indicating a relative importance of, or amount of attention to be allocated to, characters and/or portions of the second text 803B. In an example, the character attention embedding model 830 may assign attention in the second attention embedding 835 to uppercase characters and the first character in each word. In this example, attention is assigned to these characters as an abbreviation of a merchant name might be more likely to include these characters. In an example, the characters "B," "C," and "E" in the text "Bob's Car Emporium" are assigned a higher attention than other characters, as an abbreviation of the merchant name, "BCE," might be used in the logo. In some implementations, the character attention embedding model 830 may assign characters in the second text 803B a first attention, indicating higher attention, or a second attention, indicating lower attention.

The model 800 includes a character-level embedding layer 810 which takes as input the first text 803A to generate a first character embedding 815A representing character-level features of the first text 803A. The character-level embedding layer 810 takes as input the second text 803B to generate a second character embedding 815B representing character-level features of the second text 803B. The first character embedding 815A is combined with the first attention embedding 825 to obtain a first embedding 845A representing features of the first text 803A. In an example, the first character embedding 815A and the first attention embedding 825 are concatenated to obtain the first embedding 845A. The second character embedding 815B is combined with the second attention embedding 835 to obtain a second embedding 845B representing features of the second text 803B. In an example, the second character embedding 815B and the second attention embedding 835 are concatenated to obtain the second embedding 845B.

The model 800 includes a concatenate layer 850 which concatenates the first embedding 845A and the second embedding 845B to obtain a concatenated embedding 855. A transformer encoder 870 receives as input the concatenated embedding 855 and a positional embedding 865 representing relative positions of the characters to generate a character-level similarity result 875. In some implementations, the transformer encoder 870 includes multiple layers. In an example, the transformer encoder 870 includes two layers. The character-level similarity result 875 may represent a character-level similarity between the first text 803A and the second text 803B. The character-level similarity result 875 may represent a character-level similarity between the text of the logo image and the text associated with the merchant.

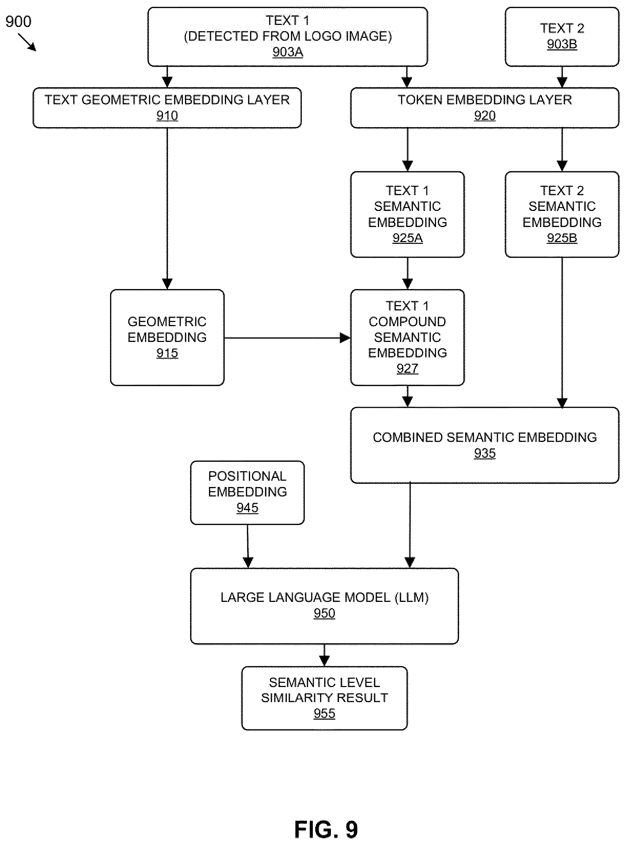

FIG. 9 illustrates an example text semantic similarity model 900, otherwise referred to as a word-level semantic similarity model. The text semantic similarity model 900 may be, or be similar to, the semantic-level text similarity comparison model 654 of FIG. 6 and/or the text semantics similarity model 740 of FIG. 7. The text semantic similarity model 900 may receive as input a first text 903A and a second text 903B and output a semantic similarity between the first text 903A and the second text 903B.

The first text 903A may be extracted from a logo image, as discussed herein. The second text 903B may be text associated with a merchant, such as text taken from a merchant webpage or received from other sources, as discussed herein.

The model 900 may include a text geometric embedding layer 910. The text geometric embedding layer 910 may be part of a personalized attention embedding model, such as the personalized attention embedding model 820 of FIG. 8. The text geometric embedding layer 910 may receive as input text geometrical information of the first text 903A representing relative sizes and positions of words and outputs a geometric embedding 915. In an example, the word "TM" may be part of a logo or part of a trademark indication, depending upon its relative size and position. In an example, the word "TM" is part of a logo when it is large and centered, and part of a trademark indication when it is small and in a corner of the logo image.

The first text 903A and the second text 903B are provided as input to a token embedding layer 920 of the model 900 which outputs a first semantic embedding 925A corresponding to the first text 903A and a second semantic embedding 925B corresponding to the second text 903B. The first semantic embedding 925A is combined with the geometric embedding 915 to obtain a compound semantic embedding 927 for the first text 903A. In some implementations, the first semantic embedding 925A and the geometric embedding 915 are concatenated to obtain the compound semantic embedding 927. The compound semantic embedding 927 and the second semantic embedding 925B are combined to obtain a combined semantic embedding 935 representing text or word-level semantic features of the first text 903A and the second text 903B. In some implementations, the compound semantic embedding 927 and the second semantic embedding 925B are concatenated to obtain the combined semantic embedding 935.

The combined semantic embedding 935 and a position embedding 945 representing relative positions of the words in the first text 903A and/or the second text 903B are provided as input to an LLM 950 which generates a semantic level similarity result 955. The semantic level similarity result, or word-level semantic similarity result, may represent a word-level semantic similarity between the first text 903A and the second text 903B.

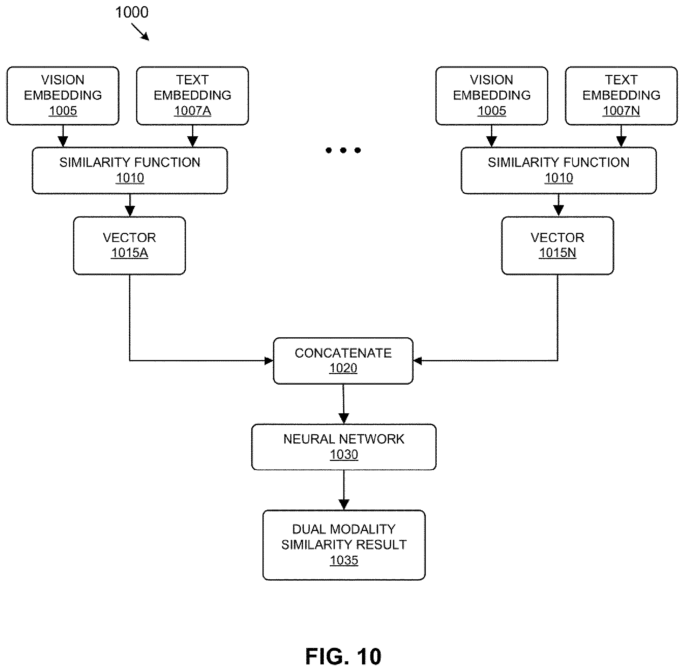

FIG. 10 illustrates an example dual-modality semantics model 1000. The text semantic similarity model 1000 may be, or be similar to, the dual-modality text similarity comparison model 656 of FIG. 6 and/or the dual-modality semantic similarity model 730 of FIG. 7. The dual-modality semantics model 1000 may receive as input vision embeddings and text embeddings and output a dual-modal similarity between the input vision embeddings and text embeddings.

A similarity function 1010 of the dual-modality semantics model 1000 may receive as input a vision embedding 1005 and a first text embedding 1007A and output a first vector 1015A representing a similarity or difference between the vision embedding 1005 and the first text embedding 1007A. The vision embedding 1005 may be extracted from a logo image, as discussed herein, and may be, or be similar to, the vision embedding 715 of FIG. 7. The first text embedding 1007A may be extracted from merchant text, such as merchant text on a website, as discussed herein such as the merchant attributes 640 of FIG. 6 and may be, or be similar to, one of the merchant embeddings of the one or more merchant embeddings 725 of FIG. 7. In an example, the first text embedding 1007A is a name embedding extracted from a merchant name of the merchant. The similarity function 1010 may receive as input a plurality of pairs of the vision embedding and text embeddings and output corresponding vectors representing the similarity or difference between the vision embedding and the text embeddings. The similarity function 1010 may receive as input the vision embedding 1005 and an nth text embedding 1007N and output an nth vector 1015N representing a similarity or difference between the vision embedding 1005 and the nth text embedding 1007N. In an example, the nth text embedding 1007N is a webpage title embedding extracted from a webpage title of a webpage of the merchant. The plurality of text embeddings may include the one or more merchant embeddings 725 of FIG. 7, including a merchant name, a merchant webpage title, a merchant description, and a merchant category.

The similarity function 1010 may include a set of individual operations which compute a difference or distance between the vision embedding and text embedding in the pair. The individual operations may include absolute value computations and/or element-wise dot products.

The dual-modality semantics model 1000 includes a concatenate layer 1020 which concatenates the plurality of vectors, including the first through nth vectors 1015A-1015N, and provides the concatenated vectors to a neural network 1030. In some implementations, the neural network is a multi-layer perceptron. The neural network 1030, using as input the concatenated vectors, outputs a dual-modality similarity result 1035 representing a dual-modality similarity between the plurality of pairs of vision embeddings and text embeddings or a similarity between the logo image and the merchant text from which the embeddings are extracted. The dual-modality similarity result 1035 may be, or be similar to, the dual-modality semantic similarity 730 of FIG. 7. In this way, the dual-modality semantics model 1000 can provide a similarity result between merchant text and a logo image, even if the logo image does not include text. This allows for logos without text to be accurately classified by a logo classification model, such as the logo classification model 700 of FIG. 7.

The various illustrative logical blocks, circuits, modules, routines, and algorithm steps described in connection with the embodiments disclosed herein can be implemented as electronic hardware, or combinations of electronic hardware and computer software. To clearly illustrate this interchangeability, various illustrative components, blocks, modules, and steps have been described above generally in terms of their functionality. Whether such functionality is implemented as hardware, or as software that runs on hardware, depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A control processor can synthesize a model for an FPGA. For example, the control processor can synthesize a model for logical programmable gates to implement a tensor array and/or a pixel array. The control channel can synthesize a model to connect the tensor array and/or pixel array on an FPGA, a reconfigurable chip and/or die, and/or the like. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While the above detailed description has shown, described, and pointed out novel features as applied to various embodiments, it can be understood that various omissions, substitutions, and changes in the form and details of the devices or algorithms illustrated can be made without departing from the spirit of the disclosure. As can be recognized, certain embodiments described herein can be embodied within a form that does not provide all of the features and benefits set forth herein, as some features can be used or practiced separately from others.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances, where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, unless otherwise noted, the use of the words "approximate," "about," "around," "substantially," etc., mean plus or minus ten percent.

The foregoing description of illustrative embodiments has been presented for purposes of illustration and of description. It is not intended to be exhaustive or limiting with respect to the precise form disclosed, and modifications and variations are possible in light of the above teachings or may be acquired from practice of the disclosed embodiments. It is intended that the scope of the invention be defined by the claims appended hereto and their equivalents.

## Claims

1. A system comprising:
one or more processors; and
a computer-readable, non-transitory medium including instructions which, when executed by the one or more processors, cause at least one of the one or more processors to:
obtain a logo image associated with a merchant;
execute a logo detection machine-learning model using as input the logo image to determine whether the logo image is a logo; and
in response to determining that the image logo is a logo, execute a logo classification machine-learning architecture to identify the merchant.

2. The system of claim 1, wherein:
the logo image is automatically extracted from a website associated with the merchant; or
the logo image is automatically extracted from a social media account associated with the merchant.

3. The system of claim 1 or 2, wherein the instructions further cause the one or more processors to:
verify that the identified merchant corresponds to a merchant associated with an origin of the logo image; and/or
display, to a user, transaction data of a transaction associated with the merchant, wherein the transaction data includes the logo image.

4. The system of any of the preceding claims, wherein the logo detection machine-learning model comprises an ensemble decision model which receives as input outputs from one or more task-specific machine-learning models.

5. The system of any of the preceding claims, wherein the logo classification machine-learning model receives as input one or more semantic similarity scores from one or more task-specific semantic similarity machine-learning models.

6. A system comprising:
one or more processors; and
a computer-readable, non-transitory medium including instructions which, when executed by the one or more processors, cause at least one of the one or more processors to:
execute a logo classification machine-learning model using as input an image to determine a vector of logo classification scores for the image, the logo classification scores indicating a confidence that the image is a logo;
execute a logo fingerprint comparison machine-learning model using as input the image to determine a vector of similarity scores for the image, the similarity scores indicating similarity to a set of known logos; and
execute a logo detection machine-learning model using as input the vector of logo classification scores and the vector of similarity scores to generate a prediction of whether the image is a logo.

7. The system of claim 6, wherein:
the logo detection machine-learning model comprises an ensemble decision model; or
the logo detection machine-learning model comprises a random forest machine-learning model.

8. The system of claim 6 or 7, wherein the logo classification machine-learning model is trained by executing the logo classification machine-learning model using as input four-channel logo images.

9. The system of any of claims 6 to 8, wherein the logo classification scores output by the logo classification machine-learning model include classification scores for non-logo images, non-logo avatars, cropped logos, and logos.

10. The system of any of claims 6 to 9, wherein the logo fingerprint comparison machine-learning model is trained by executing the logo fingerprint comparison machine-learning model using as input a first training logo image and a second training logo image to generate a comparison result indicating whether the first training logo image and the second training logo image correspond to a same merchant.

11. The system of any of claims 6 to 10, wherein the similarity scores determined by the logo fingerprint comparison machine-learning model indicate whether the image corresponds to a known logo image included in training data of the logo fingerprint comparison machine-learning model.

12. A system comprising:
one or more processors; and
a computer-readable, non-transitory medium including instructions which, when executed by the one or more processors, cause at least one of the one or more processors to:
execute a feature extraction machine-learning model using as input a logo image to extract features of the logo image;
execute a semantic comparison machine-learning model using as input the extracted features of the logo image and one or more merchant attributes of a merchant to determine a similarity vector for the logo image; and
execute a logo classification machine-learning model using as input the similarity vector to determine whether the logo image is a logo of the merchant.

13. The system of claim 12, wherein the extracted features of the logo image include image features and detected text.

14. The system of claim 12 or 13, wherein the semantic comparison machine-learning model includes:
a character-level semantic similarity model to determine a character-level similarity score of the similarity vector;
a word-level semantic similarity model to determine a word-level similarity score of the similarity vector; or
a dual-modality similarity model to determine a dual-modality similarity score of the similarity vector.

15. The system of any of claims 12 to 14, wherein the similarity vector indicates a similarity between attributes of the merchant and the extracted features of the logo image.
